(19) Europäisches Patentamt
European Patent Office
Office européen des brevets

(11) Veröffentlichungsnummer: **0 088 206**
**B1**

# (12) EUROPÄISCHE PATENTSCHRIFT

(45) Veröffentlichungstag der Patentschrift: **27.12.85**

(51) Int. Cl.⁴: **E 21 B 43/22**

(21) Anmeldenummer: **83100089.8**

(22) Anmeldetag: **07.01.83**

## (54) Verfahren zur Gewinnung von Öl aus einer unterirdischen Lagerstätte.

(30) Priorität: **06.03.82 DE 3208206**

(43) Veröffentlichungstag der Anmeldung: **14.09.83 Patentblatt 83/37**

(45) Bekanntmachung des Hinweises auf die Patenterteilung: **27.12.85 Patentblatt 85/52**

(84) Benannte Vertragsstaaten: **AT BE DE FR GB IT NL**

(73) Patentinhaber: **HÜLS AKTIENGESELLSCHAFT, Patentabteilung / PB 15 - Postfach 13 20, D-4370 Marl 1 (DE)**

(72) Erfinder: **Balzer, Dieter, Dr., Griesheimer Strasse 18, D-4370 Marl (DE)**
Erfinder: **Kosswig, Kurt, Dr., Hoechster Strasse 10, D-4370 Marl (DE)**

(56) Entgegenhaltungen:
**EP - A - 0 047 369**
**EP - A - 0 047 370**
**EP - A - 0 058 371**
**EP - A - 0 058 871**
**EP - A - 0 073 894**
**US - A - 4 110 228**

**TENSIDE DETERGENTS, Band 16, Nr. 5, 1979, Seiten 256-261, Carl Hanser Verlag, München, DE. D. BALZER et al.: "Die Phasen-Inversions-Temperatur als Auswahlkriterium für Tenside bei der tertiären Erdölgewinnung".**
**TENSIDE DETERGENTS, Band 14, Nr. 5, September/Oktober 1977, Seiten 237-239, Carl Hanser Verlag, München, DE. H. STACHE et al.:**

(56) Entgegenhaltungen: (Fortsetzung)
**"Carboxymethylierte Oxäthylate als Tenside für die tertiäre Erdölgewinnung".**
**TENSIDE DETERGENTS, Band 17, Nr. 1, 1980, Seiten 10-12, Carl Hanser Verlag, München, DE. E. KUNKEL :"Beitrag zur Analytik carboxymethylierter Oxethylate".**

EP 0 088 206 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Bei der Gewinnung von Öl aus ölführenden Lagerstätten gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird gewöhnlich Wasser in einer oder mehrere Injektionsbohrungen der Formation eingepreßt und das Öl zu einer oder mehreren Produktionsbohrungen getrieben und sodann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die gegenwärige Ölverknappung volkswirtschaftlich dringend erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischungsfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heißem Wasser bzw. sie erfolgen als Untertage-Verbrennung. Lösungs- oder Mischungsverfahren bestehen im Injizieren eines Lösungsmittels für das Erdöl in die Lagerstätte, wobei dies ein Gas und/oder eine Flüssigkeit sein kann.

Tensidflutprozesse — je nach Tensidkonzentration, gegebenenfalls Tensidtyp und Zusätzen unterscheidet man tensidgestütztes Wasserfluten, übliches Tensidfluten (Lowtension flooding), micellares Fluten und Emulsionsfluten — beruhen in erster Linie auf einer starken Erniedrigung der Grenzflächenspannung zwischen Öl und Flutwasser. In einigen Fällen jedoch, insbesondere in Gegenwart höherer Tensidkonzentrationen, entstehen Wasser-in-Öl-Dispersionen mit, verglichen zum Öl, deutlich erhöhter Viskosität, so daß hier das Tensidfluten auch auf eine Verkleinerung des Mobilitätsverhältnisses zielt, wodurch der Wirkungsgrad der Ölverdrängung erhöht wird. Reines Polymerfluten beruht überwiegend auf dem zuletzt beschriebenen Effekt des günstigeren Mobilitätsverhältnisses zwischen Öl und nachflutendem Wasser.

Die vorliegende Erfindung bezieht sich auf ein Verfahren zur Gewinnung von Öl durch Tensidfluten. Als ölmobilisierende Tenside wurden bislang vor allem organische Sulfonate, wie Alkyl-, Alkylaryl- oder Petroleumsulfonate, beschrieben. Diese besitzen jedoch eine sehr niedrige Toleranzgrenze gegenüber der Salinität der Lagerstättenwässer. Bereits Salzkonzentrationen von 1000 ppm gelten als problematisch, wobei die Empfindlichkeit dieser Tenside gegenüber Erdalkaliionen besonders ausgeprägt ist. Hier wird als obere kritische Grenzkonzentration ca. 500 ppm angenommen (US-PS 4 110 228). In Gegenwart höherer Salzkonzentrationen bilden sich bei Einsatz dieser Tenside Fällungsprodukte, die zu Verstopfungen der Formation führen können. Da jedoch viele Lagerstättenwässer wesentlich höhere Salinitäten besitzen, z. B. in Norddeutschland bis zu 250 000 ppm, hat man nach Wegen gesucht, die sonst gut ölmobilisierenden Eigenschaften der organischen Sulfonate auch für höher salinare Lagerstättensysteme nutzbar zu machen. Im Gemisch mit Cosurfactants, wie Alkoholen oder nichtionischen Tensiden, zeigten sich organische Sulfonate auch weniger elektrolytempfindlich, allerdings war dann meist auch die ölmobilisierende Wirkung verschlechtert.

Im Gegensatz zu dieser Substanzgruppe zeigen Alkyl- bzw. Alkylarylpolyglykolethersulfate oder carboxymethylierte Alkyl- bzw. Alkylaryloxethylate eine gute Verträglichkeit selbst mit extrem hohen Salinitäten (z. B. 250 000 ppm) der Lagerstättenwässer. Da die ölmobilisierende Wirkung dieser Tenside gut (H. J. Neumann, DGMK BERICHTE, Bericht 164 (1978), D. Balzer und K. Kosswig, Tenside Detergents 16, 256 (1979), sowie ihre Herstellung einfach und wirtschaftlich ist, sind diese Substanzklassen für den Einsatz bei der Ölverdrängung in mittel- und hochsalinaren Lagerstättensystemen (10 000 bis 250 000 ppm Gesamtsalzgehalt) sehr geeignet.

Bei zahlreichen Untersuchungen zur Restölmobilisierung von Modellformationen mit carboxymethylierten Oxethylaten als Tensiden wurde jedoch beobachtet, daß der Transport der Ölbank durch die Formation von einem starken Druckanstieg begleitet wird. So wurden selbst bei relativ hochpermeablen künstlichen Formationen Durckgradienten bis zu etwa 40 bar/m beobachtet, die bei Übertragung in das Feld zu Drucken weit oberhalb des petrostatischen Drucks führen und damit den Einsatz dieser Tenside bei der tertiären Erdölgewinnung ausschließen würden. Auf Druckgradienten von ähnlicher Größenordnung wird auch in der Literatur hingewiesen (C. Marx, H. Murtada, M. Burkowsky, Erdöl Erdgas Zeitschrift 93, 303 (1977). Die Autoren erklären die hohen Durckdifferenzen mit der Bildung von Emulsionszonen, die sich jedoch auf den Bereich der Flutfront beschränken sollen. Bei unseren Versuchen war allerdings eine lokale Begrenzung des Druckgradienten nicht zu erkennen. Und da Rohölemulsionen, stabilisiert durch carboxymethylierte Oxethylate, strukturviskos sind, lassen sich die hohen Druckdifferenzen auch durch eine Herabsetzung der Flutgeschwindigkeit nicht beliebig absenken. Folglich wäre beim Tensidfluten mit carboxymethylierten Oxethylaten im Ölfeld mit unbeherrschbar hohen Druckgradienten zu rechnen.

Es bestand daher die Aufgabe, für die gut ölmobilisierenden carboxymethylierten Oxethylate eine Vorgehensweise des Tensidflutens zu finden, die nicht zu hohen Druckgradienten führt. Eine Erniedrigung des Druckgradienten ist dadurch möglich, daß durch geeignete Anpassung der Tensidmenge an die Lagerstätte ein stark verzögerter Tensiddurchbruch angestrebt wird. Allerdings setzt diese Verfahrensweise homogene Formationen voraus, wie sie zwar bei künstlichen Sandschüttungen, kaum jedoch bei eigentlichen Lagerstätten gegeben sind. Eine Lösung der Aufgabe wird daher auf diese Weise kaum möglich sein.

Diese Aufgabe wurde überraschend durch Verlassen einer auch in der Literatur belegten Arbeitshypothese gelöst, derzufolge eine wirksame Restentölung nur dann möglich ist, wenn die Bedingungen für das Vorliegen einer w/o-Emulsion möglichst während des gesamten Flutprozesses gegeben sind (U. Lepper, Erdöl Erdgas Zeitschrift 92, 426 (1976)). Nach D. Balzer und K. Kosswig, Tenside Detergents 16, 256 (1976), bedeutet dies, daß die Phasen-Inversions-Temperatur (PIT) des Systems Original-Rohöl und -Formationswasser oder Flutwasser, sofern nicht mit Formationswasser geflutet wird, sowie Tensid und gegebenenfalls Zusätze deutlich unterhalb der Lagerstättentemperatur liegen muß, und zwar bis zu 15°C. Bei unter diesen Bedingungen an Modellformationen durchgeführten Flutversuchen wurden gewöhnlich sehr wirksame Entölungen beobachtet, wobei das Rohöl ganz überwiegend emulsionsfrei ausgeflutet werden konnte. Jedoch treten bei dieser Arbeitsweise sehr häufig hohe Druckgradienten auf.

Es wurde nun gefunden, daß sich der Druckgradient bei guter Entölung stark senken läßt durch ein Verfahren, wie es in den Patentansprüchen dargestellt ist. Dies war insofern äußerst überraschend, als der betreffende Temperaturbereich das Zustandsgebiet einer o/w-Emulsion ist.

Wählt man nämlich ein solches Tensid, das bezüglich des Lagerstättensystems eine PIT um 11°C und höher oberhalb der Lagerstättentemperatur besitzt, und befindet sich damit im Zustandsbereich der o/w-Emulsion, so ist die Mobilisierung des Restöls wenig wirksam, und das Öl wird ganz überwiegend als Emulsion gefördert.

Die PIT selbst wird mit Hilfe der Messung der elektrischen Leitfähigkeit bestimmt. Hierzu wird eine Emulsion, bestehend aus dem Rohöl, dem Formationswasser der betreffenden Lagerstätte oder dem Flutwasser (Phasenverhältnis 1 : 1 oder 1 : 2) und dem Tensid (2%, bezogen auf die wäßrige Phase) sowie gegebenenfalls Zusätzen, hergestellt, und ihre elektrische Leitfähigkeit in Abhängigkeit von der Temperatur gemessen. Bei der PIT schlägt eine o/w-Emulsion in eine w/o-Emulsion um bzw. umgekehrt, wobei die elektrische Leitfähigkeit sprungartig sinkt bzw. steigt.

Genau genommen ist dies ein Temperaturbereich von wenigen Grad C. Registriert als PIT wird die Temperatur, bei der die elektrische Leitfähigkeit den Mittelwert zwischen oberem (o/w) und unterem (w/o) Niveau erreicht.

Die vorliegende Erfindung bezieht sich auf den Einsatz von carboxymethylierten Oxethylaten als ölmobilisierende Tenside. Man kann diese Verbindungen nach DE-PS 2 418 444 durch Umsetzung von Oxethylaten der Formel

$$R-(O-CH_2-CH_2)_n\,OH$$

mit einem Salz der Chloressigsäure in Gegenwart von Alkalihydroxid oder Erdalkalihydroxid herstellen. Aber auch andere Herstellungsverfahren sind geeignet. R bedeutet hierbei einen gesättigten oder ungesättigten, geradkettigen oder verzweigten Alkylrest mit 6 bis 20, vorzugsweise 8 bis 16 C-Atomen, oder einen Alkylarylrest mit 3 bis 16 C-Atomen im Alkylrest. n kann nicht nur Werte von 3 bis 30 annehmen, wie in unserer Patentanmeldung P 31 34 530.1 ausgeführt, sondern der Oxethylierungsgrad kann — wie wir inzwischen aufgrund zahlreicher Versuche überraschend gefunden haben — auch zwischen 1 und 3 liegen. Das Kation kann Natrium, Kalium, Lithium, Ammonium, Calcium oder Magnesium sein. Als Alkohole und Phenole, deren Oxethylate den Carboxymethylaten zugrunde liegen, lassen sich z. B. einsetzen: Hexylalkohol, Octylalkohol, Nonylalkohol, Decylalkohol, Undecyl-, Lauryl-, Tridecyl-, Myristyl-, Palmityl- und Stearylalkohol, aber auch ungesättigte Alkohole, wie z. B. Oleylalkohol. Die Alkylkette kann dabei normal- oder verzweigtkettig sein. Besonders zweckmäßig werden handelsübliche Gemische dieser Alkohole herangezogen. Als Alkylphenole lassen sich z. B. einsetzen: Propylphenol, Butylphenol, Hexylphenol, Octylphenol, Nonylphenol, Decylphenol, Undecylphenol, Dodecylphenol, Tridecylphenol, Tetradecylphenol, Hexadecylphenol, Dibutylphenol, Dihexylphenol usw. Die Alkylkette kann normal- oder verzweigtkettig sein. Insbesondere lassen sich handelsübliche Gemische solcher Alkylphenole einsetzen.

Die Oxethylierung kann in Gegenwart katalytischer Mengen Alkalihydroxid mit 1 bis $<3$ Ethylenoxid durchgeführt werden. Die entstehenden Gemische haben annähernd eine Poisson-Verteilung.

Entsprechend ihrer Herstellung enthalten die carboxymethylierten Oxethylate stets noch ansehnliche Mengen nicht umgesetztes Oxethylat. Mit der Formel

$$R-(OCH_2-CH_2)_n-OCH_2-COOM$$

ist daher stets ein Gemisch mit unterschiedlichen Mengen an nicht umgesetztem Oxethylat gemeint. Demgemäß läßt sich ein Carboxymethylierungsgrad definieren. Es hat sich gezeigt, daß Mischungen

mit einem Carboxymethylierungsgrad zwischen 10 und 90%, vorzugsweise zwischen 30 und 90%, das Öl wirksam zu verdrängen vermögen. Besonders wirksam sind Mischungen mit Carboxymethylierungsgraden von 50 bis 90%. Mit der Angabe % sind stets Gewichtsprozente gemeint.

Die beschriebenen Mischungen aus anionischem und nichtionischem Tensid, carboxymethylierte Oxethylate genannt, sind in üblichen Lagerstättenwässern löslich oder zumindest gut dispergierbar, wobei keinerlei Ausfällungen beobachtet werden.

Erfindungsgemäß geht man folgendermaßen vor: Bei Kenntnis der Lagerstättentemperatur bzw. gegebenenfalls eines Temperaturbereiches wird aus dem Rohöl, dem Formationswasser oder Flutwasser und gegebenenfalls dem Gas der Lagerstätte und einem geeignet scheinenden carboxymethylierten Oxethylat der oben angegebenen Formel orientierend die PIT gemessen. Diese Messung ist gegebenenfalls mit weiteren Tensiden dieser Klasse und gegebenenfalls Zusätzen zu wiederholen.

Auf der Basis der Meßergebnisse erfolgt das Maßschneidern des carboxymethylierten Oxethylats, dessen ölmobilisierende Wirksamkeit für das betreffende Lagerstättensystem durch einen oder mehrere Vorversuche in einer Sandschüttung als Modellformation oder an Original- bzw. Modellbohrkernen selbst verifiziert werden kann.

Die Natriumsalze der carboxymethylierten Oxethylate, die durch Umsetzung von Oxethylaten mit Chloressigsäure bei Gegenwart von Natronlauge hergestellt werden, bieten mehrere Ansatzpunkte für die »Molekulararchitektur« mit dem Ziel, in einem bestimmten System eine gewünschte Phasen-Inversions-Temperatur einzustellen:

$$R-(OCH_2CH_2)_n-OH + ClCH_2COOH$$

$$\xrightarrow[-NaCl-H_2O]{+2\,NaOH} R-(OCH_2CH_2)_n-CH_2COONa$$

| R | n | Umsatz |
|---|---|---|
| variabel | variabel | variabel |

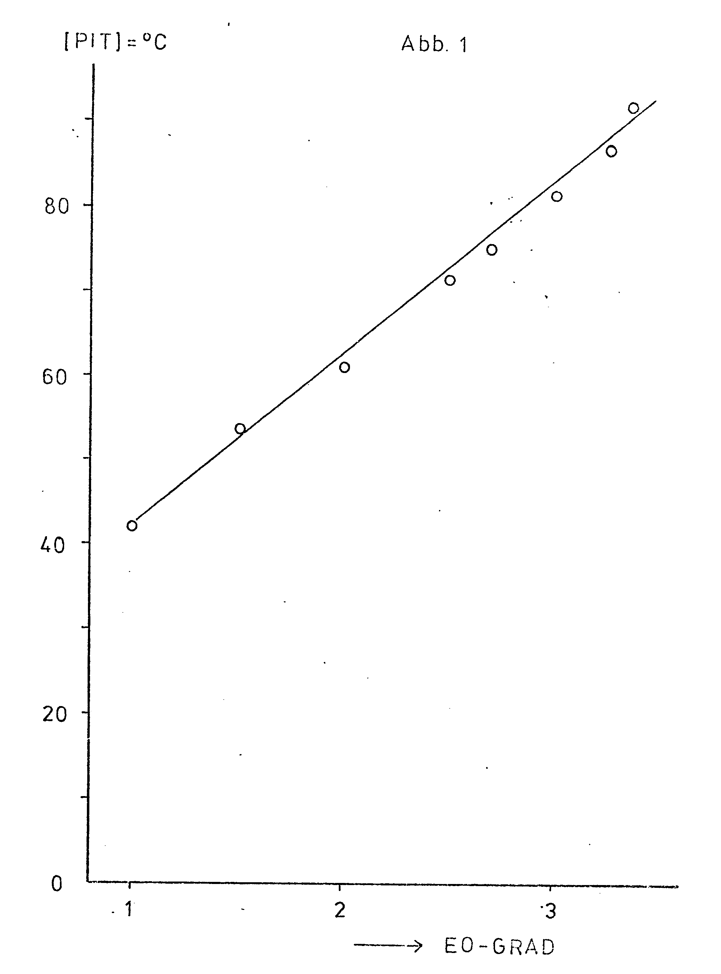

Die Salze der carboxymethylierten Oxethylate setzen sich aus drei variablen Bausteinen zusammen: dem hydrophoben Rest R, der Oxethylatkette und der Carboxymethylgruppe, deren Anteil in dem erhaltenen Produktgemisch durch Steuerung des Umsatzes des Ausgangsoxethylats mit Chloressigsäure in weiten Grenzen verändert werden kann. Als Ausgangsstoffe für den hydrophoben Rest R kommen beispielsweise lineare und verzweigte (Fett)alkohole in Frage, ferner Alkylphenole mit beliebigen Alkylresten. Der Einfluß der Alkylgruppe bzw. der Alkylarylgruppe auf die Phasen-Inversions-Temperatur wurde bereits dargestellt (D. Balzer und K. Kosswig, loc. cit.). Es gilt die Gesetzmäßigkeit, nach der eine Verstärkung der Hydrophobie des Tensidions die Phasen-Inversions-Temperatur erniedrigt und eine Erhöhung der Hydrophilie sie erhöht. In der Abbildung 1 ist die Abhängigkeit der Phasen-Inversions-Temperatur in einem bestimmten System vom Oxethylierungsgrad n wiedergegeben. Eingesetzt wurden Rohöl F, Formationswasser F und zu ca. 70% carboxymethylierte Alfol-1218-Oxethylate verschiedenen EO-Grades. Die Tensidkonzentration betrug 2%, das Phasenverhältnis o/w 1 : 2. Über den Einfluß des Carboxymethylierungsgrades auf die Phasen-Inversions-Temperatur wurde ebenfalls bereits berichtet (D. Balzer und K. Kosswig, loc. cit.). Abbildung 1 sowie die zitierten Untersuchungen demonstrieren die Variabilität, die uns die Klasse der carboxymethylierten Oxethylate, die letztlich Gemische aus ionischen und nichtionischen Tensiden darstellen, bezüglich der Lagerstättenbedingungen bietet.

Ferner können gegebenenfalls das Volumen der zu injizierenden Tensidlösung, ihre Konzentration und eventuelle Zusätze sowie ferner die Art und Größe der die Mobilität kontrollierenden Polymerlösung anhand von Modell-Flutversuchen optimiert werden. Aufgrund der Ergebnisse dieser Vorversuche wird die Tensidlösung mit Hilfe von Injektionspumpen in die Lagerstätten eingebracht. Hierbei kann die Tensidlösung entweder kontinuierlich oder in Form eines Slugs, d. h. eines eng begrenzten Volumens von 0,05 bis 4,0 PV (= Vielfaches des Porenvolumens der Lagerstätte) eingesetzt werden. Die Größe des Slugs richtet sich vor allem nach der Konzentration der Tensidlösung und nach der Wirtschaftlichkeit.

Zweckmäßigerweise geht dem Tensidfluten ein Wasserfluten voraus, wobei als Flutflüssigkeit das produzierte Formationswasser oder ein anderes Flutwasser eingesetzt wird. Die Größe dieses Wasserslugs beträgt 0,01 bis 4 PV, vorzugsweise 0,05 bis 1,0 PV. Dem Tensidslug nachgeschaltet injiziert man zweckmäßigerweise sowohl aus Gründen der Mobilitätskontrolle als auch zum Schutz der Tensidlösung vor eindringendem Formationswasser oder Flutwasser einen Polymerslug in die Lagerstätte. Hierzu wird ein Polymer oder Polymergemisch in einer solchen Konzentration in dem Formationswasser oder Flutwasser gelöst, daß die Viskosität 4- bis 6mal so hoch ist wie die des Öls. Bei Lagerstätten mittlerer und höherer Salinität (1 bis 28%) kommen hier insbesondere Biopolymere, wie Polysaccharide oder Cellulosederivate, die in Gegenwart der erhöhten Salzkonzentration noch eine ausreichende Viskosität besitzen und keine Fällungen zeigen, in Frage.

Aus Gründen einer günstigeren Viskositätsanpassung der Tensidlösung an das Öl der Lagerstätte oder zur Verminderung der Tensid- bzw. gegebenenfalls der Polymerretention kann es sinnvoll sein, dem Tensid bzw. dem Polymerslug Alkohole oder auch Glykole als Cosurfactants zuzufügen. Geeignete Cosurfactants sind hier z. B. i-Propanol, i-Butanol, n-Butanol, t-Amylalkohol, 2-Ethylhexanol, Butyldiglykol, Butyltriglykol.

Zweckmäßigerweise schließt sich an das Injizieren der Polymerlösung normales Wasserfluten als Trieb an. Dieses wird solange fortgesetzt, wie sich wirtschaftlich Öl gewinnen läßt.

Die nachfolgenden Beispiele sollen das erfindungsgemäße Verfahren erläutern:

## Beispiel 1

Zur Herstellung der künstlichen Formation wurde ein thermostatisierbares Hochdruckrohr von 70 cm Länge und 5 cm Durchmesser, versehen mit Temperaturmeßeinrichtung und Manometer, beidseitig verschließbar durch Gewindeverschlüsse mit Kapillareingang und Druckhalteventilausgang mit kantengerundetem Quarzsand beschickt. Sodann wurde die Sandschüttung mittels einer Hochdruckdosierpumpe mit Formationswasser F gesättigt und durch einen Thermostaten die gewünschte Temperatur eingestellt. Mit Hilfe eines Drucktransmitters wurde die Permeabilität der Sandschüttung bestimmt. Sodann erfolgte die Sättigung mit Rohöl, wobei gleichzeitig der Haftwassergehalt gemessen wurde. Nunmehr setzte das Wasserfluten mit einer Flutgeschwindigkeit von ca. 2,5 m/d ein. Nach Einfluten von ca. 1,5 PV Formationswasser (1 PV ca. 750 ml), wobei ein Verwässerungsgrad von 98 bis 100% erzielt wurde, wurde das Tensid als Slug injiziert. Es folgten als Trieb 3,0 PV Formationswasser. Tensid- und das anschließende Nachfluten mit Formationswasser erfolgten mit einer Flutgeschwindigkeit von ca. 1 m/d. Die Formationstemperatur betrug 68°C, ihr Druck 60 bar, die Porosität der künstlichen Formation ca. 45%, ihre Permeabilität ca. 1000 mD und ihr Haftwassergehalt ca. 25%.

Das Formationswasser F enthielt pro l ca. 23,5 g NaCl, 0,75 g KCl, 1,1 g $CaCl_2$, 5 g $MgCl_2$, 4 g $Na_2SO_4$ und 0,2 g $NaHCO_3$.

Als Rohöl F wurde ein paraffinbasisches Öl von 37° API verwendet. Der Gehalt an Paraffinen, Naphthenen und Aromaten betrug ca. 61, 18 bzw. 21%.

Als Tensidlösung wurde 1,5 PV einer 2%igen Dispersion von carboxymethyliertem $C_{14}$-Fettalkoholoxethylat mit 2,4 Molen Ethylenoxid/Mol in Formationswasser eingesetzt. Der Carboxymethylierungsgrad betrug ca. 70%, die PIT der betreffenden Rohölemulsion 73,5°C. Durch das Wasserfluten wurde eine Entölung von 69% erzielt, die sich nach weiteren 1,4 PV nach Beginn des Tensidflutens um 19% auf 88% Gesamtentölung steigern ließen. Hierbei ging die Verwässerung auf ca. 60% zurück. Während des Transports der durch das Tensid erzeugten Ölbank wurde ein mittlerer Druckgradient von ca. 1,6 bar/m gemessen.

## Beispiel 2

## (Vergleichsbeispiel)

Bei praktisch identischen Bedingungen, Substanzen und Verfahrensschritten wie in Beispiel 1, jedoch bei einer Versuchstemperatur von 80°C (PIT betrug 73,5°C, wie im Beispiel 1) wurde dieses Vergleichsbeispiel durchgeführt. Durch Wasserfluten wurde eine Entölung von 72% erreicht, die nach weiteren 1,3 PV nach Beginn des Tensidflutens sich auf 94% Gesamtentölung steigern ließen. Jedoch wurde hierbei ein mittlerer Druckgradient von 18 bar/m gemessen.

Ein solcher Druckgradient würde bei Übertragung in das Feld zu Drücken weit oberhalb des petrostatischen Drucks führen und damit den Einsatz der Tenside bei der tertiären Erdölförderung ausschließen.

## Beispiel 3

Als Modellformation wurde in diesem Beispiel ein waagerecht gelagerter, zylindrischer Kern aus Bentheimer Sandstein mit einem Durchmesser von ca. 8 und einer Länge von ca. 50 cm verwendet. Er wurde in Epoxidharz eingebettet, seine Endseiten mit mittels O-Ringen gedichteter Metallflansche verschlossen. Zur Temperierung diente ein Wasserbad, das von einem Thermostaten versorgt wurde. Nach Benetzung der Formation mit Formationswasser B, Bestimmung des Porenvolumens (1 PV ca. 620 ml) und der Permeabilität (ca. 1300 mD) wurde mit Rohöl B gesättigt. Im übrigen wurde so vorgegangen wie in den vorangehenden Beispielen, wobei jedoch die Flutgeschwindigkeit nur etwa halb so hoch waren und kein Polymer als Mobilitätspuffer dem Tensidslug nachgeflutet wurde.

Das Formationswasser B enthielt pro l ca. 63,6 g NaCl, 0,4 g KCl, 15,1 g $CaCl_2$, 3,1 g $MgCl_2$, 0,4 g $SrCl_2$ und 0,4 g $BaCl_2$.

Als Rohöl wurde ein paraffinbasisches Öl von 40° API verwendet. Der Gehalt an Paraffinen, Naphthenen und Aromaten betrug ca. 75, 12 und 13%.

Als Tensidlösung wurden 2 PV einer 1%igen Dispersion von carboxymethylierten Oxethylaten eines Fettalkoholgemisches mit 12 bis 18 Kohlenstoffatomen und 2,7 Molen Ethylenoxid pro Mol eingesetzt, die außerdem 0,2% Isobutanol enthielt. Der Carboxymethylierungsgrad des Tensids betrug ca. 75%. Die Phasen-Inversions-Temperatur der betreffenden Rohölemulsion liegt mit 48°C relativ zu der Temperatur der Modellformation von 43°C im erfindungsgemäßen Bereich. Durch Wasserfluten wurde eine Entölung von 50% bewirkt, die sich durch Tensidfluten und anschließenden Wassertrieb nach 2,0 PV auf 80% steigern ließ. Es wurde ein mittlerer Druckgradient von 0,3 bar/m gemessen.

Beispiel 4

(Vergleichsbeispiel)

Bei praktisch identischen Bedingungen, Substanzen und Verfahrensschritten wie im Beispiel 3, jedoch bei Verwendung von 2,5 PV 1%iger Lösung von carboxymethyliertem Oxethylat eines Fettalkoholgemisches mit 12 bis 18 Kohlenstoffatomen und 2,5 Molen Ethylenoxid pro Mol als Tensid, der ebenfalls 0,2% Isobutanol zugesetzt waren, wurde dieses Beispiel durchgeführt. Die Phasen-Inversions-Temperatur der Rohölemulsion lag mit 42°C hier niedriger als die Temperatur der Modellformation (43°C). Durch Wasserfluten wurde eine Entölung von 53% erzielt, die sich mit Hilfe des Tensidflutens auf 90% steigern ließ.

Während des Transports der Ölbank wird ein Druckgradient von 7 bar/m entwickelt, der lagerstättentechnisch im Feldversuch bei normalen Tiefen kaum zu beherrschen ist.

Beispiel 5

Bei praktisch identischen Bedingungen, Substanzen und Verfahrensschritten wie in Beispiel 1, jedoch bei Verwendung von carboxymethyliertem Oxethylat eines Fettalkoholgemisches mit 12 bis 18 Kohlenstoffatomen und 1,5 Molen Ethylenoxid pro Mol (PIT 46°C) und einer Lagerstättentemperatur von 41°C wurde dieser Versuch durchgeführt. Durch Wasserfluten wurde eine Entölung von 74%, die sich durch die Wirkung des Tensids auf 99% steigern ließ, erzielt. Bei diesem erfindungsgemäßen Beispiel wurde ein gut beherrschender Druckgradient von 1,2 bar/m während des Tensidflutens erzeugt.

**Patentansprüche**

1. Verfahren zur Gewinnung von Öl aus einer unterirdischen Lagerstätte mittlerer oder hoher Salinität durch Einpressen einer 0,1- bis 30%igen Lösung oder Dispersion in Formations- oder Flutwasser von carboxymethylierten Oxethylaten der Formel

$$R-(OCH_2CH_2)_n-OCH_2-COOM$$

in der R einen linearen oder verzweigten aliphatischen Rest mit 6 bis 20 Kohlenstoffatomen oder einen alkyl- oder dialkylaromatischen Rest mit 3 bis 16 Kohlenstoffatomen in der Alkylgruppe, M ein Alkali- oder Erdalkali-Metallion oder Ammonium bedeutet und der Carboxymethylierungsgrad zwischen 10 und 90% liegt, in eine Injektionsbohrung, wobei das Tensid so ausgewählt wird, daß die Phasen-Inversions-Temperatur des Systems Rohöl/Formations- oder Flutwasser/Tensid/gegebenenfalls Zusätze bei der Lagerstättentemperatur oder bis 10°C oberhalb liegt, dadurch gekennzeichnet, daß n zwischen 1 und 3 liegt.

2. Verfahren nach Anspruch 1, dadurch gekennzeichnet, daß dem System Rohöl/Formations- oder Flutwasser/Tensid Zusätze zugefügt werden.

3. Verfahren nach den Ansprüchen 1 und 2, dadurch gekennzeichnet, daß die Phasen-Inversions-Temperatur des Systems Rohöl/Formations- oder Flutwasser/Tensid/Zusätze 1 bis 10°C oberhalb der Lagerstättentemperatur liegt.

4. Verfahren nach den Ansprüchen 1 bis 3, dadurch gekennzeichnet, daß ein-, zwei- und dreiwertige Alkohole Alkoholen der Tensidlösung oder -dispersion als Zusätze zugefügt werden.

5. Verfahren nach den Ansprüchen 1 bis 3, dadurch gekennzeichnet, daß vor der Injektion der Tensidlösung 0,01 bis 4 PV Formations- oder Flutwasser in die Lagerstätte eingepreßt wird.

6. Verfahren nach den Ansprüchen 1 bis 6, dadurch gekennzeichnet, daß nach dem Injizieren der Tensidlösung 0,01 bis 4 PV Formations- oder Flutwasser in die Lagerstätte eingepreßt wird.

7. Verfahren nach Anspruch 7, dadurch gekennzeichnet, daß das Formations- oder Flutwasser ein viskositätserhöhendes Polymer enthält.

8. Verfahren nach Anspruch 1, dadurch gekennzeichnet, daß das Tensid einen Carboxymethylierungsgrad zwischen 30 und 90% hat.

## Claims

1. A process for recovering oil from a subterranean deposit of medium or high salinity by forcing into an injection bore a 0.1 to 30% solution or dispersion in formation water or floodwater of a carboxymethylated oxyethylate surfactant of the formula

$$R-(OCH_2CH_2)_n-OCH_2-COOM$$

where R is a linear or branched aliphatic radical of 6 to 20 carbon atoms or a monoalkylaromatic or dialkylaromatic radical of 3 to 16 carbon atoms in the alkyl group(s), M is an alkali metal or alkaline earth metal or ammonium ion and which has a degree of carboxymethylation is from 10% to 90%, the surfactant being chosen so that the phaseinversion temperature of the system of crude oil/formation water or floodwater/surfactant/optional additive(s) is the temperature of the deposit or up to 10°C above that temperature, characterised in that n is from 1 to 3.

2. A process according to calim 1, characterised in that one or more additives are incorporated in the system of crude oil/formation water or floodwater/surfactant.

3. A process according to claim 1 or 2, characterised in that the phase-inversion temperature of the system of crude oil/formation water or floodwater/surfactant/optional additive(s) is from 1 to 10°C above the temperature of the deposit.

4. A process according to any of claims 1 to 3, characterised in that a monohydric, dihydric or trihydric alcohol is incorporated in the surfactant solution as additive.

5. A process according to any of claims 1 to 4, characterised in that 0.01 to 4 pore volumes of formation water or floodwater are forced into the deposit before the injection of the surfactant solution.

6. A process according to any of claims 1 to 5, characterised in that 0.01 to 4 pore volumes of formation water or floodwater are forced into the deposit after the injection of the surfactant solution.

7. A process according to claim 6, characterised in that the formation water or floodwater contains a viscosity-increasing polymer.

8. A process according to claim 1, characterised in that the surfactant has a degree of carboxymethylation of from 30 to 90%.

## Revendications

1. Procédé pour extraire du pétrole d'un gisement souterrain de salinité moyenne ou élevée, par injection d'une solution ou dispersion à 0,1 à 30%, dans de l'eau de formation ou d'inondation, de produits d'oxéthylation carboxyméthylés de la formule:

$$R-(OCH_2CH_2)_n-OCH_2-COOM$$

dans laquelle R représente un radical aliphatique linéaire ou ramifié comportant de 6 à 20 atomes de carbone ou un radical alkyle ou dialkyl-aromatique comportant de 3 à 16 atomes de carbone dans le groupe alkyle, M un ion de métal alcalin ou alcalino-terreux ou un ion ammonium, et le degré de carboxyméthylation se situe entre 10 et 90%, dans un forage d'injection, le surfactif étant sélectionné de façon telle que la température d'inversion de phases du système pétrole brut/eau de formation ou d'inondation/surfactif/éventuellement additifs, se situe à la température du gisement ou jusqu'à 10°C au-dessus, caractérisé par le fait que n se situe entre 1 et 3.

2. Procédé selon la revendication 1, caractérisé par le fait qu'au système pétrole brut/eau de formation ou d'inondation/surfactif, on ajoute des additifs.

3. Procédé selon les revendications 1 et 2, caractérisé par le fait que la température d'inversion de phases du système pétrole brut/eau de formation ou d'inondation/surfactif/additifs se situe à 1 à 10°C au-dessus de la température du gisement.

4. Procédé selon les revendications 1 à 3, caractérisé par le fait que l'on ajoute à la solution ou dispersion de surfactif, comme additifs, des mono-, di- et trialcools.

5. Procédé selon les revendications 1 à 4, caractérisé par le fait qu'avant l'injection de la solution de surfactif, on injecte dans le gisement de 0,01 à 4 VP d'eau de formation ou d'inondation.

6. Procédé selon les revendications 1 à 5, caractérisé par le fait qu'après l'injection de la solution de surfactif, on injecte dans le gisement de 0,01 à 4 VP d'eau de formation ou d'inondation.

7. Procédé selon la revendication 6, caractérisé par le fait que l'eau de formation ou d'inondation contient un polymère élevant la viscosité.

8. Procédé selon la revendication 1, caractérisé par le fait que le surfactif a un degré de carboxyméthylation de 30 à 90%.

Abb. 1